# EUROPEAN PATENT APPLICATION

(11) **EP 2 597 848 A1**
(43) Date of publication of application: **29.05.2013**
(21) Application number: 11306542.9
(22) Date of filing: 23.11.2011
(51) Int. Cl.: H04M 3/38, H04M 11/04, G08B 21/02

(54) **Method of monitoring a portable device**

(71) Applicant: Alcatel Lucent, 75007 Paris (FR)
(72) Inventor: Heinz, Klaus, 10779 Berlin (DE)
(74) Representative: Wetzel, Emmanuelle

(57) **Abstract**

Method of monitoring a portable device comprising initiating a telephone call by a surveillant, authenticating the surveillant by a telephone switch, and connecting the telephone call by the telephone switch.

## Description

### Field of the Invention

The invention relates to a monitoring method.

### Background

This section introduces aspects that may be helpful in facilitating a better understanding of the invention. Accordingly, the statements of this section are to be read in this light and are not to be understood as admissions about what is in the prior art or what is not in the prior art.

In telecommunications and security, a room or area monitor is a device that allows a surveillant to call in remotely and listen to sounds in the room or area, respectively, where the device is located. An example of a room monitor is a baby monitor, also known as a baby alarm, that is, a radio system used to remotely listen to sounds made by an infant. The transmitter, equipped with a microphone, is placed near to the child and the receiver equipped with a speaker, is carried by, or near to, the person caring for the infant. Some baby monitors provide two-way communication which allows the caregiver to speak back to the baby, a function commonly referred to as parent talk-back. Some allow music to be played to the child.

### Summary

The present invention was made in view of the prior art described above, and the object of some embodiments is to provide a practical method capable of room and area monitoring.

According to an embodiment there is provided a method of monitoring a portable device comprising initiating a telephone call by a surveillant, authenticating the initiator by a telephone switch or telephone software client, and connecting the telephone call by the telephone switch.

### Description of the Embodiments

Hereinafter, the best mode for carrying out a method according to an embodiment is described in detail.

To allow for user input, the portable device is equipped with a keypad. Herein, a keypad is a set of buttons arranged in a block or pad which usually bear digits, symbols, and optionally a complete set of alphabetical letters. Since the keypad of the embodiment at hand mostly contains numbers, it may also be referred to as a numeric keypad. For improved compatibility, this numeric keypad takes the form of a telephone keypad, that is, a keypad as would appear on a touch tone telephone, laid out in a 4×3 grid. When used to dial a telephone number, pressing a single key will produce a pitch consisting of two simultaneous pure tone sinusoidal frequencies. The row in which the key appears determines the low frequency, and the column determines the high frequency. For example, pressing the "1" key will result in a sound composed of both a 697 and a 1209 hertz (Hz) tone.

To further allow the portable device to transmit sound such as human voice, the portable device takes the form of a telephone. In this context, a telephone is any point-to-point communication system whose functions include allowing two people separated by large distances to talk to each other. Due to its telephone keypad, the device of the present embodiment may also be referred to as a push-button telephone.

In addition to user information transfer, the push-button telephone allows for the establishment of and control over the underlying telecommunication circuit, that is, the complete path from the telephone to another terminal over which one-way or two-way communications may be provided. In telecommunications, such capability is commonly referred to as telecommunication signaling. To employ the potentially analog telephone line to this end, the telephone supports dual-tone multi-frequency dialing (DTMF), that is, signaling using the voice-frequency band between the push-button telephone and other communication devices. The version of DTMF used in push-button telephones is commonly referred to under its trademark Touch-Tone and is standardized by ITU-T Recommendation Q.23. It is also known in the United Kingdom as MF4.

In a preliminary step, a user of the portable device defines a password. Herein, a password is any secret word or string of characters that is used for authentication, to prove identity or gain access to the portable device. Preferably, the user keeps the password secret from those not allowed access. For ease of use, the password takes the form of a personal identification number (PIN), that is, a secret numeric password shared between the user and the portable device that can be used to authenticate to the portable device.

To enable the user to enter the password into his or her push-button telephone, the latter offers a special telephone service that may be engaged by means of a vertical service code (VSC), that is, a special code preceded with an asterisk, or * (star) key, on the telephone keypad and dialed prior to or instead of a directory number. Herein, a directory number, also referred to as a telephone number or phone number, is any sequence of digits used to call from one telephone line to another in a public switched telephone network (PSTN). In this embodiment, the sequence "*<code>*<pin>#" would be used to set the selected PIN on the push-button telephone. Thereupon, the user would enter the sequence "*<code>*<directory number>#" to activate the monitoring capability.

In a similar fashion, a surveillant may make use of a VSC such as "*<code>*<pin>*<directory number>#" to initiate a telephone call to the portable device for the purpose of monitoring the user. In this context, a surveillant is any further party that aims to exercise surveillance over the user. Where the user is a senior citizen or disabled individual, the surveillant may take the form of caregiver. Herein, a caregiver, also known as a family caregiver, spousal caregiver, or child caregiver, is any person responsible for the care of a family member, friend, or partner who is mentally ill, mentally handicapped, physically disabled, or whose health is impaired by sickness or old age, and who is in need of help in his or her activities of daily living (ADLs). Alternatively, where monitoring is offered as a paid service, the surveillant may be a personal care assistant (PCA), also known as a personal care attendant, patient care assistant, personal support worker, or home care aide. Herein, these terms refer to any service personnel who assist clients with personal, physical mobility, and therapeutic care needs, usually as per care plans established by a rehabilitation health practitioner, social worker, or other health care professional.

To establish the telephone call, the surveillant and user are connected by means of a telephone network comprising a telephone switch, also referred to as telephone exchange. For improved mobility, this telephone network takes the form of a cellular network, that is, a radio network distributed over land areas called cells, each served by at least one fixed-location transceiver known as a cell site or base station. When joined together these cells provide radio coverage over a wide geographic area. In this scenario, the push-button telephone is commonly referred to as a cellular phone.

For maximum compatibility, the cellular network conforms to the Global System for Mobile Communications (GSM). GSM is a standard set developed by the European Telecommunications Standards Institute (ETSI) to describe technologies for second generation digital cellular networks, also known as 2G or 2-G network. In this case, the telephone switch forms part of the network switching subsystem (NSS), sometimes called the GSM core network. NSS is the component of the GSM that carries out call switching and mobility management functions for mobile phones roaming on the network of base stations. It may be owned and deployed by a mobile phone operator and typically allows the cellular phone to communicate with the surveillant and other telephones in the potentially wider PSTN.

In this embodiment, the NSS is further configured to authenticate the surveillant by means of the PIN. In cryptography and access control, authentication is the act of confirming the identity of a person, tracing the origins of an artifact, ensuring that a product is what its packaging and labeling claims to be, or assuring that a computer program is a trusted one. In this particular scenario, authentication by the NSS serves the dual purpose of proving identity of the surveillant and, from the surveillant's perspective, gaining access to the cellular phone for the purpose of monitoring its user. The latter objective may further require a process of authorization, that is, verifying that the authenticated surveillant has permission to monitor the user or access specific resources required thereto. In such embodiment, authentication would thus precede authorization. If both succeed, the NSS may eventually connect the surveillant's telephone call to the cellular phone which, upon an optional further authorization process, acknowledges the connection request to the NSS.

Upon receipt of this acknowledgment, the NSS ultimately establishes a direct connection between the cellular phone and the surveillant. At this point, for improved quality of service, the NSS may select from a plurality of available technologies, such as GSM, the Universal Mobile Telecommunications System (UMTS), or LTE. More specifically, the call may take the form of a conventional voice call or be transmitted as Voice over Internet Protocol (Voice over IP, VoIP). In the latter case, transmission may be based on a wireless local area network (WLAN) instead of wireless telephone technology.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of monitoring a portable device comprising initiating a telephone call by a surveillant, authenticating the surveillant by a telephone switch, and connecting the telephone call by the telephone switch.

2. Method as in claim 1 wherein the portable device takes the form of a cellular phone, the telephone switch takes the form of a network switching subsystem, and the cellular phone, the surveillant, and the network switching subsystem are interconnected by means of a cellular telecommunications network.

3. Method as in claim 2 wherein the cellular telecommunications network is based on either of the following: second-generation wireless telephone technology, third-generation mobile telecommunications, and a fourth-generation cellular wireless standard.

4. Method as in claim 2 or 3 wherein the cellular phone takes the form of a smartphone.

5. Method as in claim 1 wherein the portable device takes the form of a tablet personal computer.

6. Method as in any of the preceding claims wherein the portable device is equipped with a softphone and the portable device, the surveillant, and the telephone switch are connected to an Internet Protocol network.

7. Method as in claim 6 wherein the telephone switch, prior to connecting the telephone call, selects at least one of the following for connecting the call:
Global System for Mobile Communications, Universal Mobile Telecommunications System, and Voice over Internet Protocol or pure VolP using any mobile data connection through WiFi or 3G, 4G.

8. Method as in claim 7 wherein the selection is based on a quality of service of the network.

9. Method as in any of the preceding claims wherein the surveillant is a caregiver.

10. Method as in any of the preceding claims wherein the telephone call is initiated by means of dual-tone multi-frequency signaling or as a VolP call.

11. Method as in claim 10 wherein the dual-tone multi-frequency signaling takes the form of in-band signaling.

12. Method as in any of the preceding claims comprising the preliminary step of defining a password, wherein the step of initiating the telephone call comprises submitting the password from the surveillant to the telephone switch and the authentication is based on the password.

13. Method as in claim 12 wherein the password takes the form of a personal identification number.

14. Method as in any of the preceding claims comprising the preliminary step of activating the monitoring on the portable device.

15. Method as in any of the preceding claims wherein the initiator is further authenticated by the portable device prior to connecting the telephone call by the telephone switch.
